Europäisches Patentamt

European Patent Office

Office européen des brevets

(11) Numéro de publication: **0 271 467**
**A1**

## (12) DEMANDE DE BREVET EUROPEEN

(21) Numéro de dépôt: **87870160.6**

(22) Date de dépôt: **13.11.87**

(51) Int. Cl.⁴: **C 10 L 11/04**
**C 10 L 5/44**

(30) Priorité: **13.11.86 FR 8616036**

(43) Date de publication de la demande:
**15.06.88 Bulletin 88/24**

(84) Etats contractants désignés:
**AT BE CH DE ES GB GR IT LI LU NL SE**

(71) Demandeur: **Millias, Daniel**
**Quartier "Le Village" Juzet d'Izaut**
**F-31160 Aspet (FR)**

(72) Inventeur: **Millias, Daniel**
**Quartier "Le Village" Juzet d'Izaut**
**F-31160 Aspet (FR)**

(74) Mandataire: **Dellicour, Paul**
**Office de Brevets E. Dellicour rue Fabry 18/012**
**B-4000 Liège (BE)**

(54) **Cagette de bois prête à être enflammé.**

(57) L'invention concerne une cagette de bois prête à être enflammée pour alimenter le foyer d'une cheminée à feu ouvert.

Cette cagette est constituée d'une caisse en bois 1 dans laquelle sont disposées une première couche de concassé de bois 2, une deuxième couche de bûchettes 3, une troisième couche de bûches 4 ainsi qu'une mèche 6 qui, préparée dans une substance pour prendre feu aisément, est disposée sur une partie de sa longueur à l'intérieur de la caisse 1 où elle est reliée à un dispositif d'activation 9, sur son fond 1a et au-dessous de la couche de concassé 2, et sur l'autre partie de sa longueur, en-dehors de la caisse 1 de manière à ce que son extrémité libre 6a débouche à l'extérieur pour être facilement allumée par l'utilisateur.

Applications : foyers de cheminées à feu ouvert pour habitations urbaines.

A _ A

fig. 2

EP 0 271 467 A1

**Description**

Cagette de bois prête à être enflammée.

La présente invention a trait aux matériaux combustibles utilisés plus particulièrement pour alimenter la combustion d'un foyer en ignition d'une cheminée à feu ouvert.

La préparation d'un feu de cheminée nécessite la mise en place de feuilles de papier, puis de petit bois (bûchettes, branchages, fagots) et enfin de gros bois (bûches). Les feuilles de papier permettent l'allumage immédiat du feu ; allumage qui, pouvant être éventuellement activé par un liquide inflammable, permet d'enflammer rapidement le petit bois le temps de l'embrasement des bûches. Une fois embrasées, ces dernières se consument lentement et durablement provoquant ainsi un développement de chaleur et de lumière qui donne une sensation agréable pour le confort physiologique de l'homme. On comprend que la préparation traditionnelle préalable à la mise en service d'un feu de cheminée, telle qu'évoquée ci-dessus, est fastidieuse notamment dans les habitations urbaines où on ne dispose pas toujours de tous les ingrédients nécessaires à la préparation d'un bon feu de cheminée. De plus, outre le fait que le stockage des différents ingrédients (fagots, bûchettes, bûches) est encombrant dans ces habitations urbaines, son lieu d'éloignement (cave, remise, garage, jardin, etc...) de la pièce d'utilisation de la cheminée, généralement pièce de loisir (salle à manger, salon, cuisine, etc...), entraîne des problèmes de salissures pour les amener jusqu'à la cheminée.

Récemment, de nouveaux matériaux combustibles ont été mis sur le marché pour remplacer en un seul produit, les matériaux traditionnels nécessaires à la préparation d'un feu de cheminée. Ils se présentent sous la forme de briquettes de déchets de bois comprimés (copeaux, sciure, etc...) Ces briquettes ont l'avantage d'être propres et économiques sur le plan calorifique mais ont l'inconvénient sur le plan esthétique, de par leur aspect de présentation générale d'une part et de par leur aspect artificiel d'autre part, de nuire à l'agrément chaleureux et au caractère convivial d'un feu traditionnel de cheminée, ce qui bien évidemment suscite un phénomène de rejet de la part des consommateurs.

Faisant le bilan de cet état de fait, le demandeur a mené des recherches qui ont abouti à la conception d'une cagette de bois prête à être enflammée et permettant d'obvier aux inconvénients précités. A cet effet, il a imaginé une caisse dans laquelle sont disposées des matières combustibles et une mèche qui, préparée dans une substance pour prendre feu aisément, est disposée sur une partie de sa longueur à l'intérieur de la caisse, sur son fond et au-dessous des matières combustibles, et sur l'autre partie de sa longueur, en-dehors de la caisse de manière à ce que son extrémité libre débouche à l'extérieur pour être facilement allumée par l'utilisateur.

On comprend que cette caisse qui, de préférence, se présente sous la forme générale d'un parallélépipède rectangle et est façonnée dans un matériau combustible, offre un grand intérêt dans la mesure où elle réunit dans une seule et même unité prête à être placée dans l'âtre d'une cheminée, tous les ingrédients nécessaires pour préparer un feu de cheminée. En effet, une fois la cagette posée dans l'âtre, il suffit d'allumer l'extrémité extérieure de la mèche pour que la flamme se propage à l'intérieur de la caisse et embrase les matières combustibles entassées à l'intérieur.

Selon une caractéristique particulièrement avantageuse de l'invention, les matières combustibles sont des morceaux de bois prédécoupés à des longueurs normalisées et disposés en couches superposées qui, en partant du fond de la caisse, sont constituées par :
- une première couche de concassé,
- une deuxième couche de bûchettes,
- et une troisième couche de bûches.

Les longueurs normalisées des morceaux de bois permettent de placer l'ensemble de la cagette sur la plaque foyère de l'âtre d'une cheminée alors que leur présentation, en couches superposées et par dimensions de sections croissantes, n'a pour objet que de reproduire la préparation conforme d'un feu traditionnel de cheminée telle qu'elle a été décrite au début du présent mémoire afin de concilier les critères pratiques d'usage de la cagette avec ceux d'une utilisation agréable des matériaux traditionnels.

Selon une autre caractéristique particulièrement avantageuse de l'invention, l'extrémité de la mèche située à l'intérieur de la caisse est reliée à un dispositif d'activation destiné à accélérer la flambée des matières combustibles. Ce dispositif d'activation, plus connu sous l'appellation "allume-barbecue", permet une flambée instantanée des morceaux de bois palliant de ce fait les problèmes d'utilisation dangereuse d'alcool à brûler et ceux de stockage des cagettes.

Selon une autre caractéristique particulièrement avantageuse de l'invention, la longueur de mèche située en-dehors de la caisse est repliée sur la paroi de cette dernière sur laquelle elle est maintenue par des moyens facilement détachables telles que des agrafes. Cette disposition de la mèche maintenue plaquée sur la paroi de la caisse, permet de présenter la cagette en tout lieu public pour la commercialisation tout en évitant un allumage intempestif de la mèche par des personnes mal intentionnées. Lorsque la cagette est en place dans l'âtre de la cheminée, il suffit de tirer sur l'extrémité de la mèche pour décrocher les agrafes et d'allumer celle-ci.

Selon une autre caractéristique particulièrement avantageuse de l'invention, les parois de la caisse sont ajourées pour autoriser le passage d'oxygène à l'intérieur de la caisse afin d'engendrer dans de bonnes conditions, le processus de combustion des morceaux de bois.

Les concepts généraux de l'invention considérés comme nouveaux venant d'être exposés ci-dessus, le mode de réalisation préférée d'une cagette qui va être ci-dessous décrite et illustrée, a pour objectif d'imager ces concepts fondamentaux sans pour autant en restreindre les variantes de constructions possibles qui pourront facilement être mises en oeuvre par un homme de métier.

Cette description est annexée de dessins sur lesquels:

La figure 1 est une vue en perspective d'une telle cagette prête à être enflammée.

La figure 2 est une vue en coupe selon A-A du dessin de la figure 1.

La figure 3 est une vue en perspective de la cagette de la figure 1, représentée enflammée.

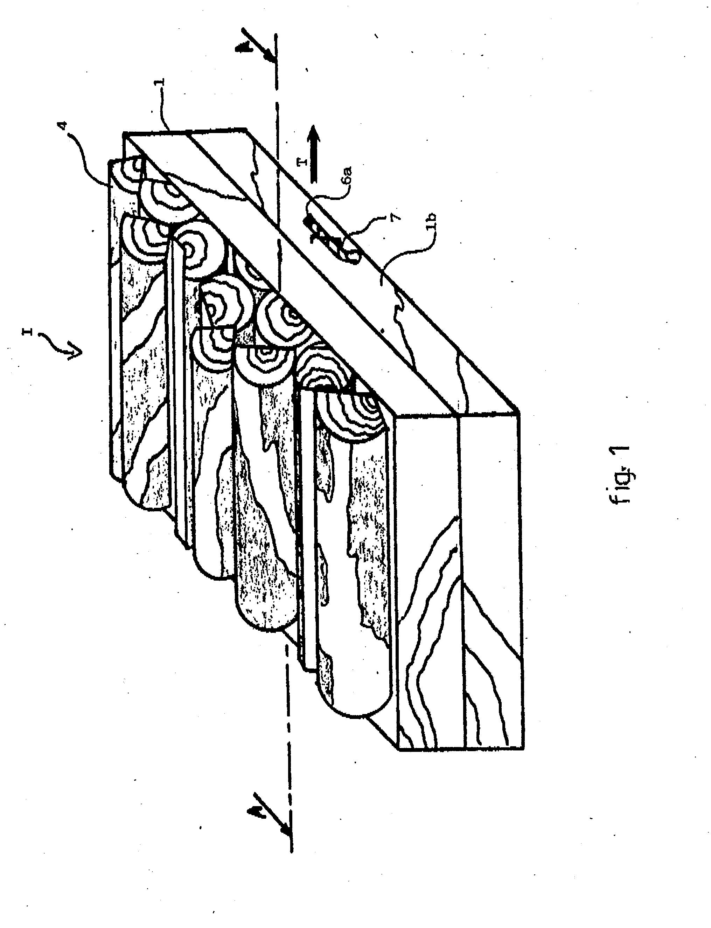

Telle qu'elle est représentée aux figures 1,2 et 3, la cagette de l'invention, référencée I dans son ensemble, est constituée d'une caisse en bois 1 adoptant la forme générale d'un parallélépipède rectangle. Sur le fond 1a de cette caisse 1 sont entassées des matières combustibles se présentant sous la forme de morceaux de bois prédécoupés à des longueurs normalisées et disposés en couches superposées qui, en partant du fond 1a, sont formées par :
- une première couche de concassé 2,
- une deuxième couche de bûchettes 3,
- et une troisième couche de bûches 4.

Avantageusement, le fond 1a de la caisse 1 est ajouré pour autoriser le passage d'un volume d'oxygène nécessaire à la combustion des morceaux de bois 2, 3 et 4. D'autre part, afin que le concassé de bois 2, dont les dimensions sont moindres que celles des autres morceaux de bois 3 et 4, ne passe au travers des ajours 1a' du fond 1a de la caisse 1, ledit fond 1a est tapissé d'une feuille de papier 5 dont les ajours 5a sont de diamètre plus petit que celui des ajours 1a' du fond 1a de la caisse 1. La présence de cette feuille de papier 5 a pour objet de contribuer à la propagation du feu sur toute la surface du fond 1a.

Selon une des dispositions principales de l'invention, une mèche 6, préparée dans une substance pour prendre feu aisément, est disposée sur une partie de sa longueur à l'intérieur de la caisse 1, sur la feuille de papier 5 au-dessous de la première couche de concassé 2 et sur l'autre partie de sa longueur, en-dehors de la caisse 1 de manière à ce que son extrémité libre 6a débouche à l'extérieur de la paroi frontale 1b de la caisse 1.

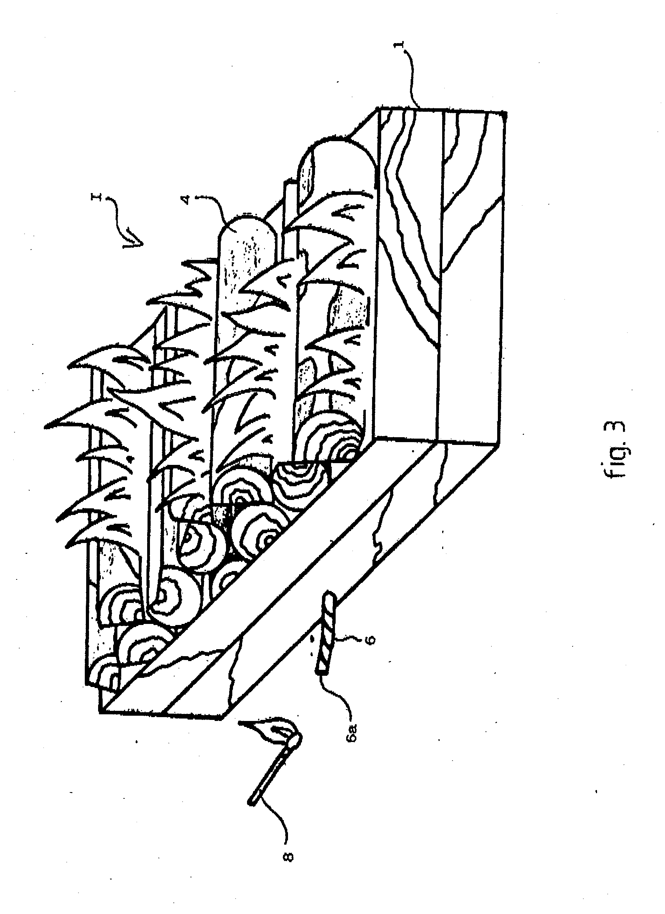

Comme on peut le voir sur le dessin de la figure 1, l'extrémité 6a de la mèche 6 est repliée sur la paroi frontale 1b de la caisse 1 sur laquelle elle est maintenue au moyen d'une agrafe 7. Cette agrafe 7 peut être facilement enlevée en exerçant une traction (flèche T) sur l'extrémité 6a de la mèche 6 afin de pouvoir enflammer celle-ci à l'aide d'une allumette 8 (cf. dessin de la figure 3).

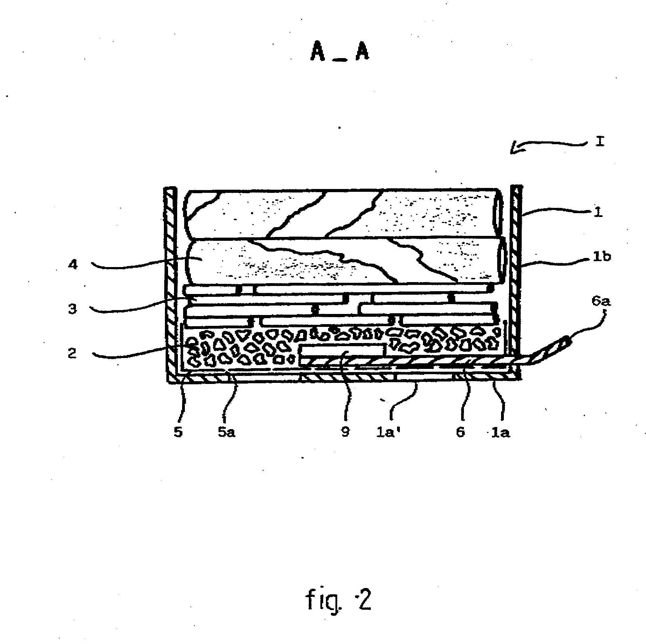

Afin de pouvoir accélérer la flambée des morceaux de bois 2, 3 et 4, l'extrémité 6b de la mèche 6 disposée à l'intérieur de la caisse 1 est reliée à un dispositif d'activation 9 du type "allume-barbecue", que l'on trouve dans le commerce sous l'appellation "ZIP" ou "PAT", et que l'on peut voir sur le dessin de la figure 2.

La cagette I trouve une application immédiate pour le foyer des cheminées à feu ouvert mais peut être également utilisée pour réaliser des grillades en plein air.

Bien entendu, l'invention n'est pas limitee à l'exemple de réalisation ci-dessus à partir duquel on pourra prévoir d'autres modes et d'autres formes d'exécution sans pour cela sortir du cadre de l'invention.

On comprend que la cagette I, qui vient d'être ci-dessus décrite et représentée, l'a été en vue d'une divulgation plutôt que d'une limitation. Bien entendu, divers aménagements, modifications et améliorations pourront être apportés à l'exemple ci-dessus, sans pour autant sortir du cadre de l'invention pris dans ses aspects et dans son esprit les plus larges.

Il est utile de préciser que certains détails techniques de réalisation n'ont pas été soulevés dans la présente description car ceux-ci n'apportent rien de plus à la bonne compréhension des concepts fondamentaux de l'invention et en outre seront facilement agencés par un homme de métier.

Par exemple, le dessus de la caisse 1 est ouvert pour autoriser la mise en place sur le fond 1a de cette dernière, de la feuille 5, de la mèche 6 avec son allume-barbecue 9, du concassé 2, des bûchettes 3 et des bûches 4. Une feuille de papier, non représentée et support d'arguments publicitaires, peut fermer la caisse 1 pour maintenir l'ensemble et pour une meilleure présentation au public de l'ensemble de la cagette I. De même, une fine membrane imperméable à l'humidité peut recouvrir toutes les parois de la caisse 1 afin de préserver les morceaux de bois sec, 2, 3 et 4 se trouvant à l'intérieur.

Afin de permettre une meilleure compréhension des dessins, une liste des références avec leurs légendes est ci-après énumerée :
I.......... cagette
1.......... caisse
1a ........ fond de la caisse 1
1a'........ ajours du fond 1a
1b......... paroi frontale de la caisse 1
2 ......... concassé de bois
3 ......... bûchette de bois
4 ......... bûches de bois
5 ......... feuille de papier
5a ........ ajours de la feuille 5
6 ......... mèche
6a ........ extrémité extérieure de la mèche 6
6b ........ extrémité intérieure de la mèche 6
7 ......... agrafe
8 ......... allumette
9 ......... dispositif d'activation ("allume-barbecue").

**Revendications**

1. Cagette de bois prête à être enflammée, caractérisée par le fait qu'elle est constituée d'une caisse (1) dans laquelle sont disposées des matières combustibles (2, 3, et 4) et une mèche (6) qui, préparée dans une substance pour prendre feu aisément, est disposée sur une partie de sa longueur à l'intérieur de la caisse (1), sur son fond (1a) et au-dessous des matières combustibles (2, 3 et 4), et sur l'autre partie de sa longueur, en-dehors de la caisse (1) de manière à ce que son extrémité libre (1a) débouche à l'extérieur pour être facilement allumée par l'utilisateur.

2. Cagette selon la revendication 1, caractérisée par le fait que les matières combustibles (2, 3 et 4) sont des morceaux de bois prédécoupés à des longueurs normalisées et disposés en couches superposées qui, en partant du fond (1a) de la caisse (1), sont constituées par :
- une première couche de concassé (2),
- une deuxième couche de bûchettes (3),
- et une troisième couche de bûches (4).

3. Cagette selon la revendication 1, caractérisée par le fait que l'extrémité (6b) de la mèche (6) située à l'intérieur de la caisse (1) est reliée à un dispositif d'activation (9) destiné à accélérer la flambée des matières combustibles (2, 3 et 4).

4. Cagette selon la revendication 1, caractérisée par le fait que la longueur de mèche (6) située en-dehors de la caisse (1) est repliée sur la paroi (1b) de cette dernière sur laquelle elle est maintenue par des moyens facilement détachables (7).

5. Cagette selon la revendication 1, caractérisée par le fait que les parois de la caisse (1) sont façonnées dans un matériau combustible.

6. Cagette selon la revendication 1, caractérisée par le fait que les parois de la caisse (1) sont ajourées pour autoriser le passage de l'oxygène nécessaire à la combustion des matières combustibles (2, 3 et 4).

7. Cagette selon les revendications 1, 2 et 6, caractérisée par le fait que le fond (1a) de la caisse (1) est tapissé d'une feuille de papier (5) ajourée pour éviter que le concassé de bois (2) ne passe à travers les ajours (1a') du fond (1a) de la caisse (1) dont les dimensions sont plus importantes que celles des ajours (5a) de la feuille de papier (5).

8. Cagette selon l'ensemble des revendications 1 à 7, caractérisée par le fait que le dessus de la caisse (1), ouvert pour autoriser sur le fond (1a), la mise en place de la feuille de papier (5), de la mèche (6), du concassé (2), des bûchettes (3) et des bûches (4), est fermé, après l'opération de remplissage, par une feuille de papier dont les rabats sont fixés sur les bords des parois latérales de la susdite caisse (1).

9. Cagette selon l'ensemble des revendications 1 à 8, caractérisée par le fait que toutes les faces de la caisse (1) sont enveloppées dans une membrane imperméable à l'humidité.

10. Cagette selon l'une quelconque des revendications 1 à 9, caractérisée par le fait que la caisse (1) adopte la forme générale d'un parallélépipède rectangle dont les dimensions sont prédéterminées pour autoriser l'introduction de la caisse (1) sur la plaque foyère de l'âtre d'une cheminée à feu ouvert.

0271467

fig. 1

0271467

A_A

fig. 2

fig. 3

0271467

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A- 396 695 (WANNER) <br> * Résumé, points 1,2; figures 1,2 * <br> --- | 1-10 | C 10 L 11/04 <br> C 10 L 5/44 |
| Y | US-A-2 666 695 (BRODY) <br> * Revendication; figures 1-5 * <br> --- | 1-10 | |
| A | FR-A-2 460 319 (THOMAS) <br> * Revendications 1-7; figures * <br> --- | 1-10 | |
| A | FR-A-2 246 624 (VAN MINDEN) <br> * Revendications 1-4; figures 1-4 * <br> --- | 1-10 | |
| A | FR-A- 404 235 (GUION) <br> * Résumé; figures 1,2 * <br> ----- | 1-10 | |

DOMAINES TECHNIQUES RECHERCHES (Int. Cl.4)

C 10 L

Le présent rapport a été établi pour toutes les revendications

| Lieu de la recherche | Date d'achèvement de la recherche | Examinateur |
|---|---|---|
| LA HAYE | 12-02-1988 | MEERTENS J. |

EPO FORM 1503 03.82 (P0402)